# FASCICULE DE BREVET EUROPEEN

(11) **EP 4 399 149 B1**
(45) Date de publication et mention de la délivrance du brevet: **08.04.2026**
(21) Numéro de dépôt: 22773720.2
(22) Date de dépôt: 08.09.2022
(51) Int. Cl.: B64C 25/16, B64C 25/26, B64D 45/00

(54) **PROCEDE ET DISPOSITIF DE DEVERROUILLAGE D'UNE TRAPPE D'UN ATTERRISSEUR D'AERONEF**
VERFAHREN UND VORRICHTUNG ZUM ENTRIEGELN EINER TÜR EINES FLUGZEUGFAHRWERKS
METHOD AND DEVICE FOR UNLOCKING A DOOR OF AN AIRCRAFT LANDING GEAR

(30) Priorité: 09.09.2021 FR 2109468
(43) Date de publication de la demande: 17.07.2024
(73) Titulaire: Safran Landing Systems, 78140 Vélizy-Villacoublay (FR)
(72) Inventeur: FRAVAL, Jérôme, 77550 Moissy-Cramayel (FR)
(74) Mandataire: Cabinet Boettcher
(86) Numéro de dépôt international: PCT/EP2022/075038
(87) Numéro de publication internationale: WO 2023/036897

(56) Documents cités:
- EP-A1- 3 575 221
- EP-A1- 3 702 272
- GB-A- 2 585 065
- US-A1- 2012 097 792
- US-A1- 2013 075 527

## Description

La présente invention est relative au verrouillage et déverrouillage d'une trappe, en particulier d'une trappe d'atterrisseur d'aéronef.

### ARRIERE PLAN DE L'INVENTION

On connaît des aéronefs munis d'atterrisseurs escamotables, de soutes destinées à recevoir ces atterrisseurs lorsque l'aéronef est en vol, et de trappes pour fermer ces soutes. Le déploiement et la rétraction des atterrisseurs, tout comme l'ouverture et la fermeture des trappes, sont effectués à l'aide d'actionneurs de manœuvre tels que des vérins.

Lorsque l'atterrisseur arrive en position rétractée, il est automatiquement maintenu dans cette position par des moyens de retenue. De manière similaire, lorsque la trappe arrive en position fermée, elle est automatiquement verrouillée dans cette position par des moyens d'accrochage qui comprennent généralement un unique boîtier d'accrochage sur lequel s'articule un crochet destiné à emprisonner un galet fixé sur la trappe. Le décrochetage du crochet est réalisé à l'aide d'un actionneur principal de déverrouillage, le plus souvent hydromécanique ou électromécanique. Les moyens d'accrochage comportent souvent un actionneur de secours à même de déverrouiller le crochet si l'actionneur principal est inopérant.

En vol, le décrochetage du crochet et l'ouverture et la fermeture de la trappe sont commandés lors de séquences de déploiement et de rétraction de l'atterrisseur. Il est à noter que la trappe est refermée et crochetée lorsque l'atterrisseur est rétracté mais aussi une fois qu'il a été déployé. Le document GB 2 585 065 A divulgue un procédé et un dispositif de déverrouillage comportant des boîtiers d'accrochage et des actionneurs.

Ce type d'architecture permet d'empêcher tout déploiement intempestive de l'atterrisseur en cas de défaillance de ses moyens de retenue, à condition que la trappe et ses moyens d'accrochage soient dimensionnés pour assurer le maintien de l'atterrisseur sous ce type de chargement.

Selon la réglementation CS-25 (« Certification Spécifications for Large Aéroplanes »), il est nécessaire de classer l'unique boîtier d'accrochage équipant la trappe comme un élément structurel principal (« Principal Structural Element » ou PSE) afin de s'assurer qu'aucune panne simple du boîtier d'accrochage puisse entraîner un événement tendant à endommager l'intégrité structurelle globale de l'aéronef.

Or, un tel classement entraîne des conséquences sur le design du boîtier d'accrochage, son procédé de fabrication, la nature des matériaux qui le compose, mais aussi son intégration dans l'aéronef pour pouvoir être inspecté visuellement afin de détecter d'éventuelles anomalies telles que des criques.

### OBJET DE L'INVENTION

L'invention a pour but de proposer une solution remédiant au moins en partie aux inconvénients précités

### RESUME DE L'INVENTION

A cet effet, on propose un procédé de déverrouillage d'une trappe d'un atterrisseur d'aéronef montée mobile entre une position ouverte et une position fermée, la trappe étant associée à des moyens d'accrochage comprenant un premier boîtier d'accrochage et un deuxième boîtier d'accrochage agencés pour bloquer individuellement la trappe en position fermée, un premier actionneur de déverrouillage et un deuxième actionneur de déverrouillage agencés pour agir respectivement sur le premier boîtier d'accrochage et le deuxième boîtier d'accrochage en vue de les désactiver, et des moyens de détection de la trappe en position fermée.

Selon l'invention, le procédé comprend, lors d'une première séquence d'ouverture de la trappe bloquée en position fermée par le premier boîtier d'accrochage et le deuxième boîtier d'accrochage, les étapes suivantes :
- commander le premier actionneur de déverrouillage pour désactiver le premier boîtier d'accrochage ;
- patienter un premier temps d'attente supérieur au temps nécessaire à la trappe pour initier son passage de la position fermée à la position ouverte de manière à permettre aux moyens de détection de détecter un éventuel début d'ouverture de la trappe ;
- détecter l'éventuel début d'ouverture de la trappe par les moyens de détection et en déduire, le cas échéant, une défaillance du deuxième boîtier d'accrochage ;
- commander le deuxième actionneur de déverrouillage pour désactiver le deuxième boîtier d'accrochage.

On comprend que l'actionnement décalé des boîtiers d'accrochage permet de tester que le boîtier d'accrochage dernièrement actionné remplit bien son office au moins pendant la durée du temps d'attente. On considère alors que ce boîtier d'accrochage est fonctionnel.

Avantageusement, le procédé comprend, lors d'une deuxième séquence d'ouverture de la trappe bloquée en position fermée par le premier boîtier d'accrochage et le deuxième boîtier d'accrochage, les étapes suivantes :
- commander le deuxième actionneur de déverrouillage pour désactiver le deuxième boîtier d'accrochage ;
- patienter un deuxième temps d'attente supérieur au temps nécessaire à la trappe pour initier son passage de la position fermée à la position ouverte de manière à permettre aux moyens de détection de détecter un éventuel début d'ouverture de la trappe ;
- détecter l'éventuel début d'ouverture de la trappe par les moyens de détection et en déduire, le cas échéant, une défaillance du premier boîtier d'accrochage ; et
- commander le premier actionneur de déverrouillage pour désactiver le premier boîtier d'accrochage.

Selon une caractéristique particulière, la première séquence d'ouverture de la trappe correspond à une rétraction de l'atterrisseur après un décollage, et la deuxième séquence d'ouverture de la trappe correspond à un déploiement de l'atterrisseur avant un atterrissage.

Selon une autre caractéristique particulière, la première séquence et la deuxième séquence d'ouverture de la trappe sont réalisées au sol.

De manière particulière, le procédé comprend en outre l'étape d'enregistrer, dans une mémoire de maintenance de l'aéronef, la défaillance du premier boîtier d'accrochage et/ou du deuxième boîtier d'accrochage, et d'en informer le pilote de l'aéronef.

De manière particulière, le premier instant et le deuxième temps d'attente sont identiques et sensiblement égaux à 0,5 secondes.

L'invention concerne aussi un dispositif de déverrouillage d'une trappe d'un atterrisseur d'aéronef. Le dispositif comprend des moyens d'accrochage comprenant un premier boîtier d'accrochage et un deuxième boîtier d'accrochage agencés pour bloquer la trappe en position fermée, un premier actionneur de déverrouillage et un deuxième actionneur de déverrouillage agencés pour agir respectivement sur le premier boîtier d'accrochage et le deuxième boîtier d'accrochage en vue de les désactiver, des moyens de détection de la trappe en position fermée, et une unité de commande agencée pour mettre en œuvre un tel procédé.

De manière particulière, les moyens de détection comprennent au moins un capteur de proximité.

L'invention concerne également un aéronef pourvu d'un tel dispositif.

### BREVE DESCRIPTION DES DESSINS

L'invention sera mieux comprise à la lumière de la description qui suit, laquelle est purement illustrative et non limitative, et doit être lue en regard des figures annexées parmi lesquelles :
[Fig.1] la figure 1 est une vue schématique d'un dispositif de verrouillage, selon un mode de réalisation particulier de l'invention, d'une trappe d'un atterrisseur d'aéronef ;
[Fig.2] la figure 2 illustre un procédé de déverrouillage de la trappe illustrée à la figure 1, lors d'une séquence de rétraction de l'atterrisseur ;
[Fig.3A] la figure 3A illustre un procédé de déverrouillage de la trappe illustrée à la figure 1, lors d'une séquence de déploiement de l'atterrisseur ;
[Fig.3B] la figure 3B illustre un procédé de déverrouillage de la trappe illustrée à la figure 1, lors d'une séquence de rétraction de l'atterrisseur ;

### DESCRIPTION DETAILLEE DE L'INVENTION

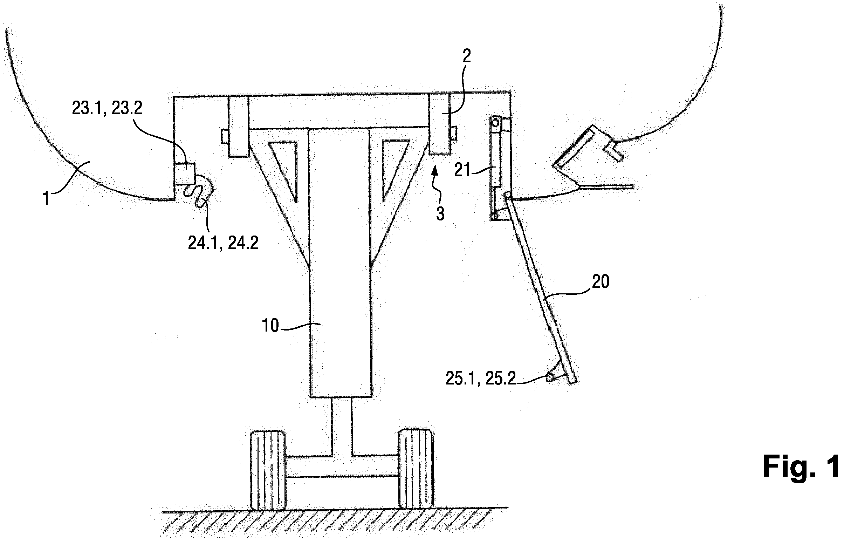

Comme illustré à la figure 1, l'invention est ici décrite en relation avec un aéronef 1 comprenant un atterrisseur 10 articulé sur une structure 2 de l'aéronef 1 entre une position déployée illustrée ici et une position rétractée dans laquelle l'atterrisseur 10 est reçu dans une soute 3 refermable par une trappe 20.

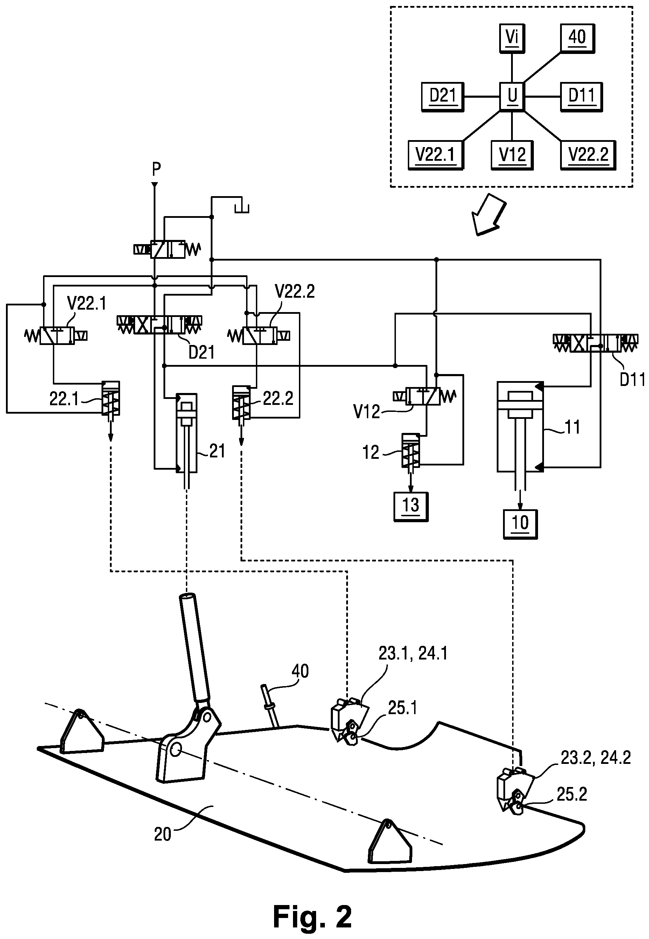

En référence à la figure 2, un vérin 11 double effet est attelé à l'atterrisseur 10 et permet de manœuvrer celui-ci entre la position rétractée et la position déployée. L'atterrisseur 10 est maintenu en position rétractée par un unique boîtier d'accrochage 13 muni d'un crochet permettant de crocheter une olive solidaire de l'atterrisseur 10 lorsque ce dernier arrive en position rétractée. Le décrochetage du crochet est commandé par un actionneur de déverrouillage 12 hydromécanique.

De manière similaire, un vérin 21 double effet est attelé à la trappe 20 et permet de manœuvrer celle-ci entre une position ouverte permettant le déploiement et la rétraction de l'atterrisseur, et une position fermée refermant la soute 3. La trappe 20 est maintenue en position fermée par un premier boîtier d'accrochage 23.1 et un deuxième boîtier d'accrochage 23.2 tous deux solidaires de la structure de l'aéronef 1. Le premier boîtier d'accrochage 23.1 est muni d'un crochet 24.1 permettant de crocheter une première olive 25.1 solidaire de la trappe 20 lorsque ladite trappe 20 arrive en position fermée. Le deuxième boîtier d'accrochage 23.2 est muni d'un crochet 24.2 permettant de crocheter une deuxième olive 25.2 solidaire de la trappe 20 lorsque ladite trappe 20 arrive en position fermée. On comprendra que le premier boîtier d'accrochage 23.1 permet de maintenir la trappe 20 en position fermée indépendamment du deuxième boîtier d'accrochage 23.2, et inversement. Le premier boîtier d'accrochage 23.1 et le deuxième boîtier d'accrochage 23.2 sont ici identiques, tout comme la première olive 25.1 et le deuxième olive 25.2.

Le décrochetage du crochet 24.1 équipant le premier boîtier d'accrochage 23.1 est commandé par un premier actionneur de déverrouillage 22.1 hydromécanique. De façon similaire, le décrochetage du crochet 24.2 équipant le deuxième boîtier d'accrochage 23.2 est commandé par un deuxième actionneur de déverrouillage 22.2 hydromécanique. Les premier et deuxième actionneurs de déverrouillage 22.1, 22.2 sont ici identiques.

Le vérin 11 servant à manœuvrer l'atterrisseur 10 est commandé par un distributeur monostable D11 relié à une source de fluide sous pression P. L'actionneur 12 permettant de désactiver le boîtier d'accrochage 13 est commandé par une vanne monostable V12 reliée à la source de fluide sous pression P.

Le vérin 21 servant à manœuvrer la trappe 20 est commandé par un distributeur monostable D21 relié à la source de fluide sous pression P. Le premier actionneur 22.1 permettant de désactiver le premier boîtier d'accrochage 23.1 est commandé par une première vanne monostable V22.1 reliée à la source de fluide sous pression P. De manière similaire, le deuxième actionneur 22.2 permettant de désactiver le deuxième boîtier d'accrochage 23.2 est commandé par une deuxième vanne monostable V22.2 reliée à la source de fluide sous pression P.

Une vanne d'isolement Vi monostable permet d'isoler, notamment pendant certaines phases de vol, les distributeurs D11, D21 et les vannes de commande V12, V22.1, V22.2 de la source de fluide sous pression P, afin de limiter le déploiement et la rétraction intempestifs de l'atterrisseur 10, mais aussi l'ouverture et la fermeture intempestives de la trappe 20.

On notera que, en cas de défaillance du boîtier d'accrochage 13, l'atterrisseur 10 serait malgré tout retenu dans la soute 3 par la trappe 20 verrouillée en position fermée via le premier boîtier d'accrochage 23.1 et le deuxième boîtier d'accrochage, de sorte que le verrouillage de la trappe 20 tend à limiter tout déploiement intempestif de l'atterrisseur 10.

L'aéronef 1 comprend également une unité de commande U agencée pour commander les distributeurs D21, D22 reliés aux vérins 11, 21 et les vannes V12, V22.1, V22.2 reliées aux actionneurs 12, 22.1, 22.2, de manière à contrôler le déploiement et la rétraction de l'atterrisseur 10, le verrouillage dudit atterrisseur 10 en position rétractée, l'ouverture et la fermeture de la trappe 20, et le verrouillage de la trappe en position fermée.

L'aéronef 1 comprend en outre un capteur de proximité 40 de type inductif relié à l'unité de commande U et agencé pour détecter la présence de la trappe 20 en position fermée, et donc susceptible de révéler un début d'ouverture de ladite trappe 20 jusqu'à un état de non-fermeture de la trappe 20.

Afin de vérifier l'intégrité du premier boîtier d'accrochage 23.1 et du deuxième boîtier d'accrochage 23.2, et ainsi se prémunir d'une panne latente de ceux-ci, l'unité de commande U est agencée pour mettre en œuvre un procédé de déverrouillage de la trappe 20 de l'atterrisseur 10.

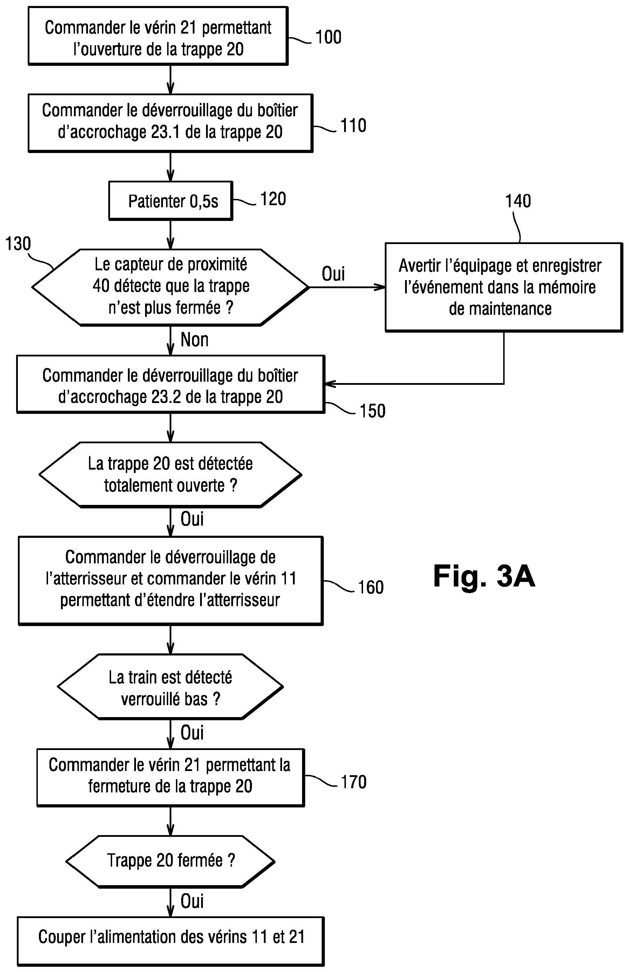

Selon l'invention, le procédé comprend, lors d'une séquence de rétraction de l'atterrisseur 10 après un décollage, les étapes suivantes (figure 3A) :
- commander le vérin 21 via le distributeur D21 pour ouvrir la trappe 20 (étape 100) ;
- commander le premier actionneur 22.1 de déverrouillage via la vanne V22.1 pour désactiver le premier boîtier d'accrochage 23.1 (étape 110) ;
- patienter un premier temps d'attente T1 supérieur au temps nécessaire à la trappe 20 pour initier son passage de la position fermée à la position ouverte de manière à permettre au capteur de proximité 40 de détecter un éventuel début d'ouverture de la trappe 20 (étape 120) ;
- détecter l'éventuel début d'ouverture de la trappe 20 par le capteur de proximité 40 (étape 130) et en déduire, le cas échéant, une défaillance du deuxième boîtier 23.2 d'accrochage qui sera enregistrée dans une mémoire de maintenance de l'aéronef 1 et rapportée au pilote de l'aéronef 1 (étape 140) ;
- commander le deuxième actionneur 22.2 de déverrouillage via la vanne V22.2 pour désactiver le deuxième boîtier d'accrochage 23.2 (étape 150) ;
- lorsque la trappe 20 arrive en position ouverte, commander l'actionneur 12 de déverrouillage de l'atterrisseur 10 via la vanne V12 et commander le vérin 11 pour rétracter ledit atterrisseur 10 ;
- lorsque l'atterrisseur 10 arrive en position rétractée, commander le vérin 21 via le distributeur D21 pour fermer la trappe 20 (étape 160) ; et
- lorsque la trappe arrive en position fermée, couper l'alimentation des vérins 11, 21 et des actionneurs 12, 22.1, 22.2 de déverrouillage via la vanne d'isolement Vi (étape 170).

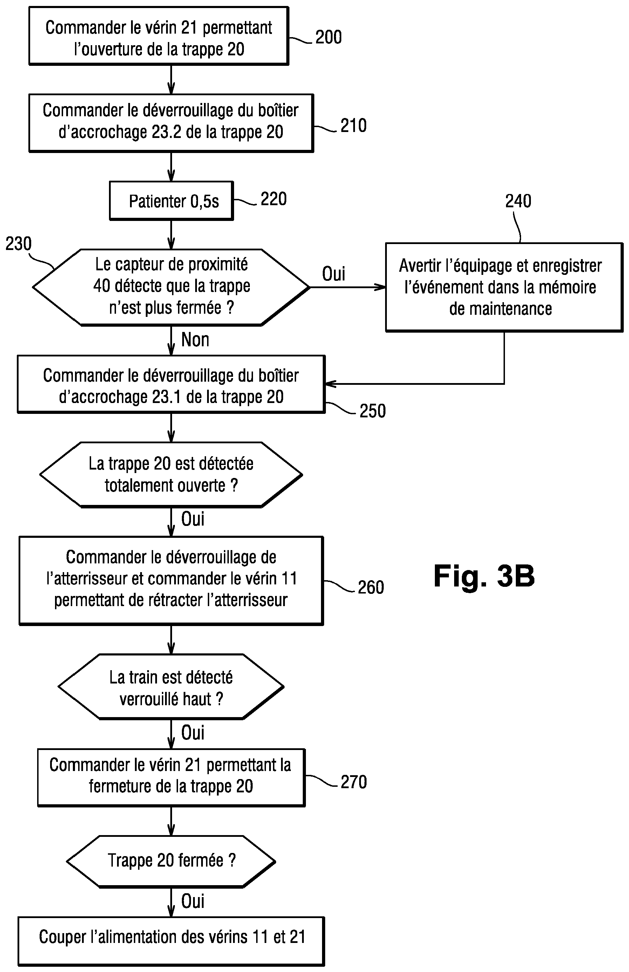

Le procédé comprend également, lors d'une séquence de déploiement de l'atterrisseur 10 avant un atterrissage, les étapes suivantes (figure 3B) :
- commander le vérin 21 via le distributeur D21 pour ouvrir la trappe 20 (étape 200) ;
- commander le deuxième actionneur 22.2 de déverrouillage via la vanne V22.2 pour désactiver le deuxième boîtier d'accrochage 23.2 (étape 210) ;
- patienter un deuxième temps d'attente T2 supérieur au temps nécessaire à la trappe 20 pour initier son passage de la position fermée à la position ouverte de manière à permettre au capteur de proximité 40 de détecter un éventuel début d'ouverture de la trappe 20 (étape 230) ;
- détecter l'éventuel début d'ouverture de la trappe 20 par le capteur de proximité 40 et en déduire, le cas échéant, une défaillance du premier boîtier d'accrochage 23.1 qui sera enregistrée dans la mémoire de maintenance et rapportée au pilote de l'aéronef 1 (étape 240) ;
- commander le premier actionneur 22.1 de déverrouillage via la vanne V22.1 pour désactiver le premier boîtier d'accrochage 23.1 (étape 250) ;
- lorsque la trappe 20 arrive en position ouverte, commander le vérin 11 pour déployer l'atterrisseur 10 ;
- lorsque l'atterrisseur 10 arrive en position déployée, commander le vérin 21 via le distributeur D21 pour fermer la trappe 20 (étape 260) ; et
- lorsque la trappe arrive en position fermée, couper l'alimentation des vérins 11, 21 et des actionneurs 12, 22.1, 22.1 de déverrouillage via la vanne d'isolement Vi (étape 270).

Le premier temps d'attente T1 et le deuxième temps d'attente T2 sont ici identiques et sensiblement égaux à 0,5 secondes.

On comprendra qu'un tel procédé permet de tester alternativement le bon fonctionnement du premier boîtier 23.1 et du deuxième boîtier 23.2 de déverrouillage sur chaque cycle de vol complet de l'aéronef 1.

Le bon fonctionnement du premier boîtier 23.1 et du deuxième boîtier 23.2 de déverrouillage peut également être testé au sol, en particulier lorsque l'aéronef 1 est en stationnement. Le procédé comprend alors les étapes suivantes :
- lors d'une première séquence d'ouverture de la trappe 20 :
   - commander le vérin 21 via le distributeur D21 pour ouvrir la trappe 20 ;
   - commander le premier actionneur 22.1 de déverrouillage via la vanne V22.1 pour désactiver le premier boîtier d'accrochage 23.1 ;
   - patienter pendant le temps d'attente T1 de manière à permettre au capteur de proximité 40 de détecter un éventuel début d'ouverture de la trappe 20 ;
   - détecter l'éventuel début d'ouverture de la trappe 20 par le capteur de proximité 40 et en déduire, le cas échéant, une défaillance du deuxième boîtier d'accrochage 23.2 qui sera enregistrée dans la mémoire de maintenance et rapportée au pilote de l'aéronef 1 ;
   - commander le deuxième actionneur 22.2 de déverrouillage via la vanne V22.2 pour désactiver le deuxième boîtier d'accrochage 23.2 ;
   - lorsque la trappe 20 arrive en position ouverte, commander le vérin 21 via le distributeur D21 pour fermer la trappe 20 ;
- lors d'une deuxième séquence d'ouverture de la trappe 20 :
   - commander le vérin 21 via le distributeur D21 pour ouvrir la trappe 20 ;
   - commander le deuxième actionneur 22.2 de déverrouillage via la vanne V22.2 pour désactiver le deuxième boîtier d'accrochage 23.2 ;
   - patienter pendant le temps d'attente T2 de manière à permettre au capteur de proximité 40 de détecter un éventuel début d'ouverture de la trappe 20 ;
   - détecter l'éventuel début d'ouverture de la trappe 20 par le capteur de proximité 40 et en déduire, le cas échéant, une défaillance du premier boîtier d'accrochage 23.1 qui sera enregistrée dans la mémoire de maintenance et rapportée au pilote ;
   - commander le premier actionneur 22.1 de déverrouillage via la vanne V22.1 pour désactiver le premier boîtier d'accrochage 23.1 ;
   - lorsque la trappe 20 arrive en position ouverte, commander le vérin 21 via le distributeur D21 pour fermer la trappe 20.

La vérification du bon fonctionnement du premier boîtier 23.1 et du deuxième boîtier 23.2 de déverrouillage peut également être réalisée au sol par un opérateur désactivant manuellement et alternativement les premier et deuxième boîtiers 23.1, 23.2 d'accrochage pour libérer la trappe 20.

Bien entendu, l'invention n'est pas limitée au mode de réalisation décrit mais englobe toute variante entrant dans le champ de l'invention telle que définie par les revendications.

Bien qu'ici les premier et deuxième boîtiers 23.1, 23.2 d'accrochage soient identiques, ils peuvent être différents.

Bien qu'ici les premier et deuxième actionneurs 22.1, 22.2 de déverrouillage soient hydromécaniques, ils peuvent être de nature différente (électromécanique...).

Bien qu'ici les temps d'attente T1 et T2 sont identiques, ils peuvent être différents : le temps d'attente T1 peut être supérieur au temps d'attente T2, ou inversement.

Bien qu'ici la détection de la trappe 20 en position fermée soit assuré par un capteur de proximité 40, d'autres moyens de détection peuvent être envisagés (capteur de contact...) .

## Revendications

1. Procédé de déverrouillage d'une trappe (20) d'un atterrisseur (10) d'aéronef (1) montée mobile entre une position ouverte et une position fermée, la trappe étant associée à des moyens d'accrochage comprenant un premier boîtier d'accrochage (23.1) et un deuxième boîtier d'accrochage (23.2) agencés pour bloquer individuellement la trappe en position fermée, un premier actionneur de déverrouillage (22.1) et un deuxième actionneur de déverrouillage (22.2) agencés pour agir respectivement sur le premier boîtier d'accrochage et le deuxième boîtier d'accrochage en vue de les désactiver, et des moyens de détection (40) de la trappe en position fermée, le procédé comprenant, lors d'une première séquence d'ouverture de la trappe (20) bloquée en position fermée par le premier boîtier d'accrochage (23.1) et le deuxième boîtier d'accrochage (23.2), les étapes suivantes :
- commander le premier actionneur de déverrouillage (22.1) pour désactiver le premier boîtier d'accrochage (23.1) ;
- patienter un premier temps d'attente (T1) supérieur au temps nécessaire à la trappe pour initier son passage de la position fermée à la position ouverte de manière à permettre aux moyens de détection (40) de détecter un éventuel début d'ouverture de la trappe ;
- détecter l'éventuel début d'ouverture de la trappe par les moyens de détection (40) et en déduire, le cas échéant, une défaillance du deuxième boîtier d'accrochage (23.2) ; et
- commander le deuxième actionneur de déverrouillage (22.2) pour désactiver le deuxième boîtier d'accrochage (23.2).

2. Procédé selon la revendication 1, comprenant, lors d'une deuxième séquence d'ouverture de la trappe (20) bloquée en position fermée par le premier boîtier d'accrochage (23.1) et le deuxième boîtier d'accrochage (23.2), les étapes suivantes :
- commander le deuxième actionneur de déverrouillage (22.2) pour désactiver le deuxième boîtier d'accrochage (23.2) ;
- patienter un deuxième temps d'attente (T2) supérieur au temps nécessaire à la trappe pour initier son passage de la position fermée à la position ouverte de manière à permettre aux moyens de détection (40) de détecter un éventuel début d'ouverture de la trappe ;
- détecter l'éventuel début d'ouverture de la trappe par les moyens de détection (40) et en déduire, le cas échéant, une défaillance du premier boîtier d'accrochage (23.1) ; et
- commander le premier actionneur de déverrouillage (22.1) pour désactiver le premier boîtier d'accrochage (23.1).

3. Procédé selon la revendication 2, dans lequel la première séquence d'ouverture de la trappe (20) correspond à une rétraction de l'atterrisseur (10) après un décollage, et la deuxième séquence d'ouverture de la trappe (20) correspond à un déploiement de l'atterrisseur (10) avant un atterrissage.

4. Procédé selon la revendication 2, dans lequel au moins l'une des première séquence et deuxième séquence d'ouverture de la trappe (20) est réalisée au sol.

5. Procédé selon l'une quelconque des revendications 2 à 4, comprenant en outre l'étape d'enregistrer, dans une mémoire de maintenance de l'aéronef (1), la défaillance du premier boîtier d'accrochage (23.1) et/ou du deuxième boîtier d'accrochage (23.2), et d'en informer le pilote de l'aéronef.

6. Procédé selon l'une quelconque des revendications 2 à 5, dans lequel le premier temps d'attente (T1) et le deuxième temps d'attente (T2) sont identiques et sensiblement égaux à 0,5 secondes.

7. Dispositif de déverrouillage d'une trappe (20) d'un atterrisseur (10) d'aéronef (1), le dispositif comprenant des moyens d'accrochage comprenant un premier boîtier d'accrochage (23.1) et un deuxième boîtier d'accrochage (23.2) agencés pour bloquer la trappe en position fermée, un premier actionneur de déverrouillage (22.1) et un deuxième actionneur de déverrouillage (22.2) agencés pour agir respectivement sur le premier boîtier d'accrochage et le deuxième boîtier d'accrochage en vue de les désactiver, des moyens de détection (40) de la trappe en position fermée, et une unité de commande (U) agencée pour mettre en œuvre le procédé de déverrouillage selon l'une quelconque des revendications précédentes.

8. Dispositif selon la revendication 7, dans lequel les moyens de détection comprennent au moins un capteur de proximité (40).

9. Aéronef pourvu d'une soute qui est fermée par une trappe et qui reçoit un atterrisseur, un dispositif de déverrouillage selon la revendication 7 ou 8 étant associé à la trappe.

## Patentansprüche

1. Verfahren zum Entriegeln einer Tür (20) eines Fahrwerks (10) eines Flugzeugs (1), die zwischen einer offenen und einer geschlossenen Position beweglich angebracht ist, wobei die Tür mit Verriegelungsmitteln verbunden ist, die eine erste Verriegelungsvorrichtung (23.1) und eine zweite Verriegelungsvorrichtung (23.2) umfassen, die so angeordnet sind, dass sie die Tür einzeln in geschlossener Position arretieren, einem ersten Entriegelungsaktuator (22.1) und einem zweiten Entriegelungsaktuator (22.2), die so angeordnet sind, dass sie jeweils auf die erste Verriegelungsvorrichtung und die zweite Verriegelungsvorrichtung einwirken, um diese zu deaktivieren, und Detektionsmitteln (40) zum Erkennen der Tür in geschlossener Position, wobei das Verfahren bei einer ersten Öffnungssequenz der Tür (20), die durch die erste Verriegelungsvorrichtung (23.1) und die zweite Verriegelungsvorrichtung (23.2) in geschlossener Position arretiert ist, die folgenden Schritte umfasst:
- Ansteuern des ersten Entriegelungsaktuators (22.1), um die erste Verriegelungsvorrichtung (23.1) zu deaktivieren;
- Abwarten einer ersten Wartezeit (T1), die länger ist als die Zeit, die die Tür benötigt, um ihren Übergang von der geschlossenen in die geöffnete Position einzuleiten, damit die Detektionsmittel (40) einen möglichen Beginn des Öffnens der Tür erkennen können;
- Erkennen des möglichen Beginns des Öffnens der Tür durch die Detektionsmittel (40) und gegebenenfalls Herleiten eines Ausfalls der zweiten Verriegelungsvorrichtung (23.2) daraus; und
- Ansteuern des zweiten Entriegelungsaktuators (22.2), um die zweite Verriegelungsvorrichtung (23.2) zu deaktivieren.

2. Verfahren nach Anspruch 1, das bei einer zweiten Öffnungssequenz der Tür (20), die durch die erste Verriegelungsvorrichtung (23.1) und die zweite Verriegelungsvorrichtung (23.2) in geschlossener Position arretiert ist, die folgenden Schritte umfasst:
- Ansteuern des zweiten Entriegelungsaktuators (22.2), um die zweite Verriegelungsvorrichtung (23.2) zu deaktivieren;
- Abwarten einer zweiten Wartezeit (T2), die länger ist als die Zeit, die die Tür benötigt, um ihren Übergang von der geschlossenen in die geöffnete Position einzuleiten, damit die Detektionsmittel (40) einen möglichen Beginn des Öffnens der Tür erkennen können;
- Erkennen des möglichen Beginns des Öffnens der Tür durch die Detektionsmittel (40) und gegebenenfalls Herleiten eines Ausfalls der ersten Verriegelungsvorrichtung(23.1) daraus); und
- Ansteuern des ersten Entriegelungsaktuators (22.1), um die erste Verriegelungsvorrichtung (23.1) zu deaktivieren.

3. Verfahren nach Anspruch 2, bei dem die erste Öffnungssequenz der Tür (20) einem Einfahren des Fahrwerks (10) nach einem Start entspricht und die zweite Öffnungssequenz der Tür (20) einem Ausfahren des Fahrwerks (10) vor einer Landung entspricht.

4. Verfahren nach Anspruch 2, bei dem mindestens eine der ersten Sequenz und der zweiten Sequenz zum Öffnen der Tür (20) am Boden durchgeführt wird.

5. Verfahren nach einem der Ansprüche 2 bis 4, das zusätzlich den Schritt umfasst, den Ausfall der ersten Verriegelungsvorrichtung (23.1) und/oder der zweiten Verriegelungsvorrichtung (23.2) in einem Wartungsspeicher des Flugzeugs (1) zu speichern und den Piloten des Flugzeugs darüber zu informieren.

6. Verfahren nach einem der Ansprüche 2 bis 5, bei dem die erste Wartezeit (T1) und die zweite Wartezeit (T2) identisch sind und im Wesentlichen 0,5 Sekunden betragen.

7. Vorrichtung zum Entriegeln einer Tür (20) eines Fahrwerks (10) eines Flugzeugs (1), wobei die Vorrichtung Verriegelungsmittel umfasst, die eine erste Verriegelungsvorrichtung (23.1) und eine zweite Verriegelungsvorrichtung (23.2) umfassen, die so angeordnet sind, dass sie die Tür in geschlossener Position arretieren, einen ersten Entriegelungsaktuator (22.1) und einen zweiten Entriegelungsaktuator (22.2), die so angeordnet sind, dass sie jeweils auf die erste Verriegelungsvorrichtung und die zweite Verriegelungsvorrichtung einwirken, um diese zu deaktivieren, Detektionsmittel (40) zum Erkennen der Tür in geschlossener Position und eine Steuereinheit (U), die so angeordnet ist, dass sie das Verfahren zum Entriegeln nach einem der vorstehenden Ansprüche durchführt.

8. Vorrichtung nach Anspruch 7, bei der die Detektionsmittel mindestens einen Näherungssensor (40) umfassen.

9. Flugzeug mit einem durch eine Tür verschlossenen Schacht, der ein Fahrwerk aufnimmt, wobei der Tür eine Entriegelungsvorrichtung nach Anspruch 7 oder 8 zugeordnet ist.

## Claims

1. Method for unlocking a door (20) of an aircraft (1) landing gear (10) movably mounted between an open position and a closed position, the door being associated with attachment means comprising a first attachment housing (23.1) and a second attachment housing (23.2) arranged to individually lock the door in the closed position, a first unlocking actuator (22.1) and a second unlocking actuator (22.2) arranged to respectively control the first attachment housing and the second attachment housing with a view to deactivate them, and means (40) for detecting the door in the closed position, the method comprising, during a first sequence of opening the door (20) locked in the closed position by the first attachment housing (23.1) and the second attachment housing (23.2), the following steps:
- controlling the first unlocking actuator (22.1) to deactivate the first attachment housing (23.1);
- waiting a first waiting time (T1) greater than the time necessary for the door to initiate its passage from the closed position to the open position, so as to enable the detection means (40) to detect the door possibly starting to open;
- detecting the door possibly starting to open by the detection means (40) and deducing from this, if necessary, a failure of the second attachment housing (23.2); and
- controlling the second unlocking actuator (22.2) to deactivate the second attachment housing (23.2).

2. Method according to claim 1, comprising, during a second sequence of opening the door (20) locked in the closed position by the first attachment housing (23.1) and the second attachment housing (23.2), the following steps:
- controlling the second unlocking actuator (22.2) to deactivate the second attachment housing (23.2);
- waiting a second waiting time (T2) greater than the time necessary for the door to initiate its passage from the closed position to the open position, so as to enable the detection means (40) to detect the door possibly starting to open;
- detecting the door possibly starting to open by the detection means (40) and deducing from this, if necessary, a failure of the first attachment housing (23.1); and
- controlling the first unlocking actuator (22.1) to deactivate the first attachment housing (23.1).

3. Method according to claim 2, wherein the first sequence of opening the door (20) corresponds to a retraction of the landing gear (10) after a take-off, and the second sequence of opening the door (20) corresponds to a deployment of the landing gear (10) before a landing.

4. Method according to claim 2, wherein at least one of the first sequence and second sequence of opening the door (20) is done on the ground.

5. Method according to any one of claims 2 to 4, further comprising the step of recording, in a maintenance memory of the aircraft (1), the failure of the first attachment housing (23.1) and/or of the second attachment housing (23.2), and informing the pilot of the aircraft about this.

6. Method according to any one of claims 2 to 5, wherein the first waiting time (T1) and the second waiting time (T2) are identical and substantially equal to 0.5 seconds.

7. Device for unlocking a door (20) of an aircraft (1) landing gear (10), the device comprising attachment means comprising a first attachment housing (23.1) and a second attachment housing (23.2) arranged to lock the door in the closed position, a first unlocking actuator (22.1) and a second unlocking actuator (22.2) arranged to respectively control the first attachment housing and the second attachment housing with a view to deactivate them, means (40) for detecting the door in the closed position, and a control unit (U) arranged to use the unlocking method according to any one of the preceding claims.

8. Device according to claim 7, wherein the detection means comprise at least one proximity sensor (40).

9. Aircraft provided with a hold which is closed by a door and which receives a landing gear, an unlocking device according to claim 7 or 8 being associated with the door.
